# EUROPEAN PATENT SPECIFICATION

(11) **EP 3 282 157 B1**
(45) Date of publication and mention of the grant of the patent: **28.02.2024**
(21) Application number: 16776406.7
(22) Date of filing: 23.03.2016
(51) Int. Cl.: F15B 13/08, F16K 11/07, F16K 27/00, F16K 27/04, F16K 31/42, F15B 13/04, F15B 13/043

(54) **CONTROL VALVE AND FLUID PRESSURE CONTROL DEVICE WITH SAME**
STEUERVENTIL UND FLÜSSIGKEITSDRUCKREGELUNGSVORRICHTUNG DAMIT
SOUPAPE DE COMMANDE ET DISPOSITIF DE RÉGULATION DE PRESSION DE FLUIDE COMPRENANT CELLE-CI

(30) Priority: 09.04.2015 JP 2015080083
(43) Date of publication of application: 14.02.2018
(73) Proprietor: KYB Corporation, Minato-ku, Tokyo 105-5128 (JP); Takeuchi MFG. Co., Ltd., Hanishina-gun, Nagano 389-0605 (JP)
(72) Inventor: MIYASHITA, Hideki, Hanishina-gun Nagano 389-0688 (JP); MATSUZAKI, Keiichi, Hanishina-gun Nagano 389-0688 (JP); KONDO, Hiroki, Hanishina-gun Nagano 389-0605 (JP)
(74) Representative: Grünecker Patent- und Rechtsanwälte PartG mbB
(86) International application number: PCT/JP2016/059232
(87) International publication number: WO 2016/163238

(56) References cited:
- EP-A2- 0 840 018
- EP-A2- 1 048 854
- JP-A- H11 230 106
- JP-A- 2008 089 030
- US-A1- 2006 081 297

## Description

### TECHNICAL FIELD

The present invention relates to a fluid pressure control device with a control valve that controls extending and contracting of a hitch quick cylinder.

### BACKGROUND ART

As a conventional construction machine, one is known which includes a quick hitch cylinder that actuates a quick hitch mechanism for attaching and detaching an attachment to a tip portion of an arm.

JP2013-148175A discloses a quick hitch device in which the quick hitch cylinder extends to perform a grasping operation when a grasp/release selector switch is switched to a grasping position, and the quick hitch cylinder contracts to perform a releasing operation when the grasp/release selector switch is switched to a releasing position.

### SUMMARY OF INVENTION

A construction machine includes a plurality of actuators including a quick hitch cylinder. Generally, control valves that control the actuators are individually assembled in valve housings, and the valve housings are stacked to configure a valve block.

The extending and contracting of the quick hitch cylinder is controlled by a quick hitch control valve. Working oil to make the quick hitch cylinder extend needs to be guided via a dedicated valve housing stacked on the valve housing in which the quick hitch control valve is assembled. As such, in order to supply and discharge working oil to the quick hitch cylinder, two valve housings need to be used, one being the valve housing in which the quick hitch control valve is assembled and the other being the dedicated valve housing for guiding the working oil that makes the quick hitch cylinder extend. Thus, this causes enlargement of the valve block. Further prior art is known from documents EP 0 840 018 A2, US 2006/081297 A1 and EP 1 048 854 A2.

An object of the present invention is to provide a fluid pressure control device which can reduce the space required for the valve block.

This object is solved by the subject matter of claim 1. The dependent claims depict advantageous embodiments of the present invention.

### BRIEF DESCRIPTION OF DRAWINGS

Fig. 1 is a hydraulic circuit diagram of a hydraulic control device according to an embodiment of the present invention, and shows a state in which a control valve is in a neutral position.
Fig. 2 is a hydraulic circuit diagram of a hydraulic control device according to an embodiment of the present invention, and shows a state in which a control valve is in a switching position.
Fig. 3 is a sectional view of a control valve according to an embodiment of the present invention, and shows a state in a neutral position.
Fig. 4 is a sectional view of a control valve according to an embodiment of the present invention, and shows a state in a switched position.
Fig. 5 is a plan view showing a valve block in which a valve housing of a control valve according to an embodiment of the present invention and valve housings of another control valves are stacked.
Fig. 6 is a sectional view showing a modification of a control valve according to an embodiment of the present invention.

### DESCRIPTION OF EMBODIMENTS

An embodiment of the present invention will be described below with reference to the drawings.

A control valve 100 according to an embodiment of the present invention controls extending and contracting of a quick hitch cylinder 1 for actuating a quick hitch mechanism (not shown). The quick hitch mechanism is installed in a construction machine such as a hydraulic shovel, and is for attaching and detaching attachments such as a bucket and a pile driver to a tip portion of an arm.

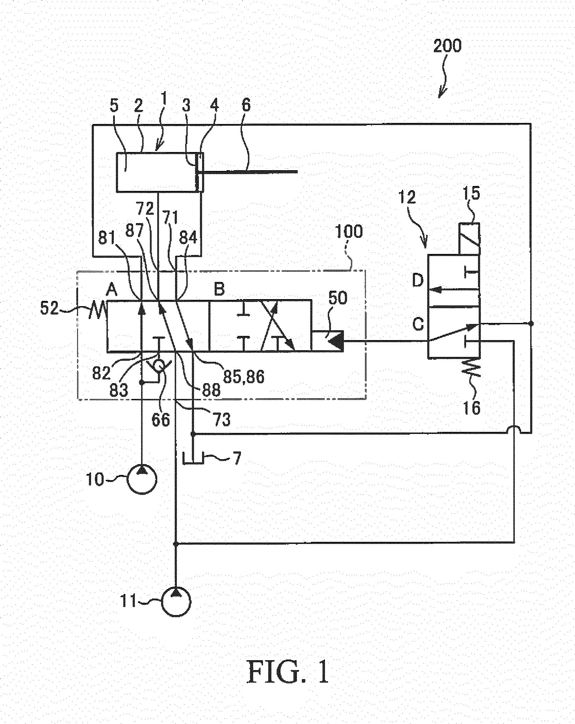

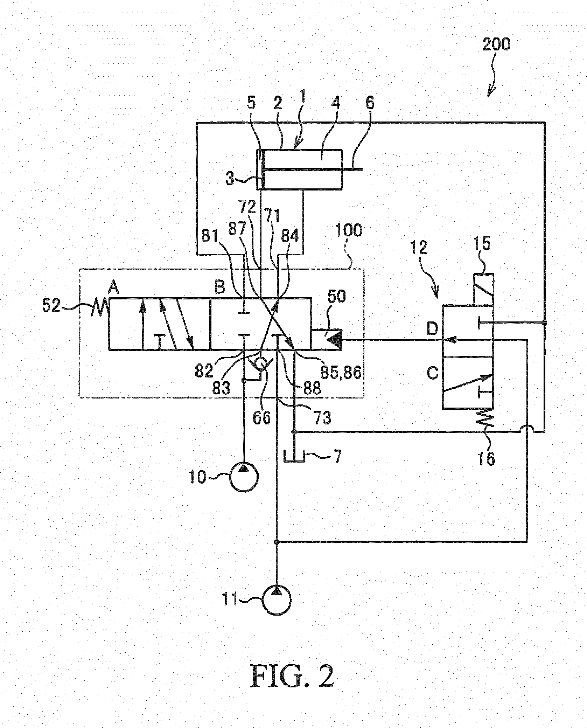

First described with reference to Figs. 1 and 2 is a hydraulic control device (fluid pressure control device) 200 including the control valve 100. Fig. 1 shows a case in which the control valve 100 is in a neutral position A and the quick hitch cylinder 1 is in an extended state. Fig. 2 shows a case in which the control valve 100 is in a switched position B and the quick hitch cylinder 1 is in a contracted state.

The quick hitch cylinder 1 includes a hollow cylindrical cylinder 2, a piston 3 that is inserted slidably into the cylinder 2 so as to partition the inside of the cylinder 2 into a rod side chamber 4 and a anti-rod side chamber 5, and a rod 6 whose one end is connected to the piston 3 and whose other end extends externally of the cylinder 2.

The hydraulic control device 200 includes a main pump 10 that discharges working oil (working fluid), a pilot pump 11 serving as a sub-pump that discharges working oil having a lower pressure than that of the main pump 10, a control valve 100 that controls supplying and discharging of the working oil with respect to the quick hitch cylinder 1, and a pilot pressure control valve 12 that controls a pilot pressure guided from the pilot pump 11 to a pilot chamber 50 of the control valve 100.

The main pump 10 and the pilot pump 11 are driven by power of an engine installed in the construction machine. The main pump 10 functions as a hydraulic pressure supplying source that makes the quick hitch cylinder 1 contract. The pilot pump 11 functions as a pilot pressure supplying source for switching the control valve 100, and also functions as a hydraulic pressure supplying source that makes the quick hitch cylinder 1 extend.

The control valve 100 becomes the neutral position A (position shown in Fig. 1) by biasing force of a spring 52 serving as an biasing member when no pilot pressure is guided to the pilot chamber 50, and switches to the switched position B (position shown in Fig. 2) due to the pilot pressure when pilot pressure is guided to the pilot chamber 50.

When the control valve 100 is in the neutral position A, working oil discharged from the main pump 10 is discharged to a tank 7, while working oil discharged from the pilot pump 11 is supplied to the anti-rod side chamber 5 of the quick hitch cylinder 1 and working oil of the rod side chamber 4 is discharged to the tank 7, as shown in Fig. 1. This causes the quick hitch cylinder 1 to be kept in the extended state due to the pilot pressure with a relatively low pressure, and an engaged state of the attachment to the arm is maintained.

Moreover, when the control valve 100 switches to the switched position B, the supply of the working oil from the pilot pump 11 to the anti-rod side chamber 5 is blocked and the working oil of the anti-rod side chamber 5 is discharged to the tank 7, while the working oil discharged from the main pump 10 is supplied to the rod side chamber 4, as shown in Fig. 2. This causes the quick hitch cylinder 1 to contract due to a discharging pressure of the main pump 10 with a high pressure, and the engaged state of the attachment to the arm is released.

As such, the quick hitch cylinder 1 is kept in the extended state when keeping the attachment on the tip portion of the arm, and is contracted when releasing the attachment from the tip portion of the arm.

The pilot pressure control valve 12 is a electromagnetic switching valve that is in a normal position C (position shown in Fig. 1) due to biasing force of a spring 16 when a solenoid 15 is not excited, and that switches to a communicating position D (position shown in Fig. 2) when the solenoid 15 is excited.

When the pilot pressure control valve 12 is in the normal position C, the communication of the pilot pump 11 with the pilot chamber 50 is blocked, and the pilot chamber 50 communicates with the tank 7, as shown in Fig. 1. This causes no pilot pressure to be guided to the pilot chamber 50, and thus the control valve 100 becomes the neutral position A.

When the pilot pressure control valve 12 switches to the communicating position D, the pilot pressure is guided from the pilot pump 11 to the pilot chamber 50, as shown in Fig. 2. This causes the control valve 100 to switch to the switched position B.

The driver's seat of the construction machine is provided with a quick hitch operation switch that has two positions, an engage position and a release position, and which is operated by a crew. When the quick hitch operation switch is in the engaged position, the solenoid 15 is not excited, and when the quick hitch operation switch is switched to the released position, the solenoid 15 is excited.

Therefore, when the quick hitch cylinder 1 is kept in the extended state to keep the attachment on the arm, the quick hitch operation switch is set in the engage position, and when the quick hitch cylinder 1 is contracted to release the attachment from the arm, the quick hitch operation switch is operated to the release position.

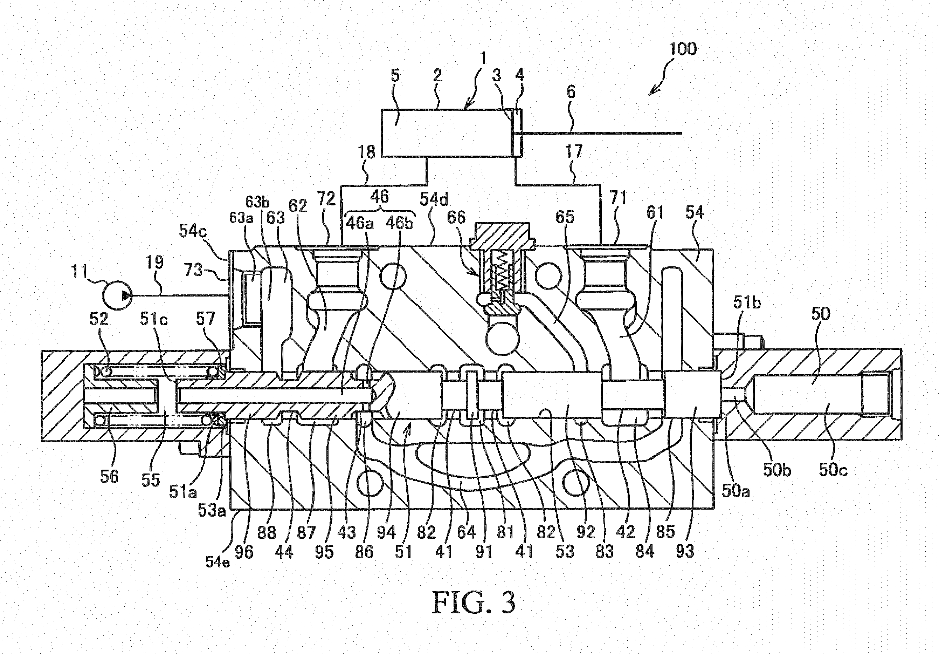

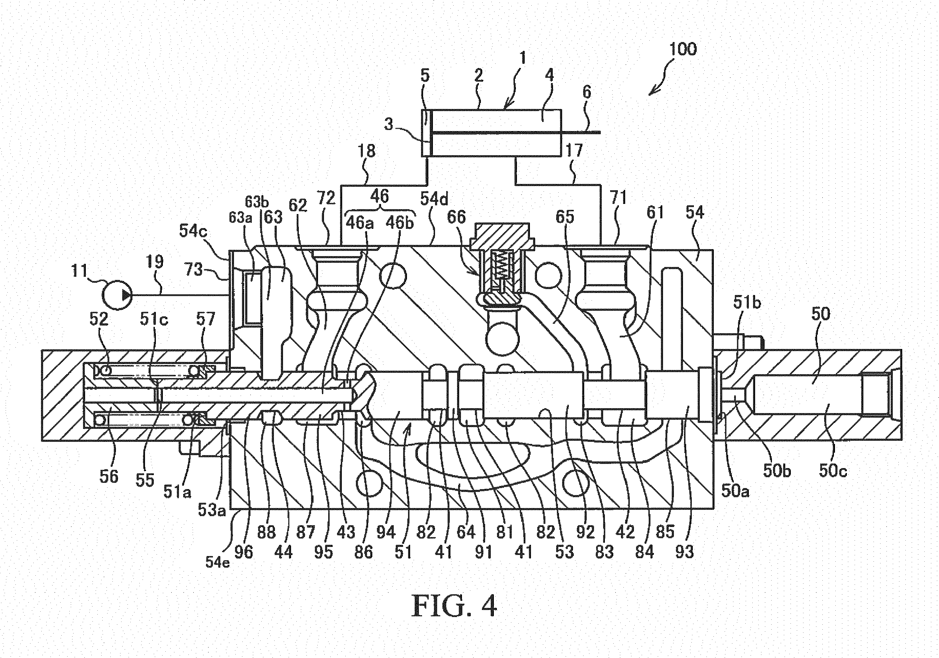

Next, a structure of the control valve 100 will be described, mainly with reference to Figs. 3 and 4. Fig. 3 shows a case in which the control valve 100 is in the neutral position A and the quick hitch cylinder 1 is in the extended state (corresponding to Fig. 1), and Fig. 4 shows a case in which the control valve 100 is in the switched position B and the quick hitch cylinder 1 is in the contracted state (corresponding to Fig. 2). Identical configurations between Figs. 1 and 2 and Figs. 3 and 4 will be applied with identical reference signs.

The control valve 100 includes: a spool 51 that switches supplying and discharging of working oil to the quick hitch cylinder 1 according to movement thereof in an axial direction; a block-shaped valve housing 54 of a block form having a spool hole 53 in which the spool 51 is inserted slidably; a spring chamber 55 provided to face one end of the spool 51, for housing a spring 52 that biases the spool 51; and a pilot chamber 50 provided to face the other end of the spool 51, to which pilot pressure making the spool 51 move against the biasing force of the spring 52 is guided.

Inside the spring chamber 55 are housed: a stopper member 56 disposed on a bottom portion of the spring chamber 55, to regulate the movement of the spool 51 towards a direction in which the spring 52 is compressed; and a spring receiving member 57 whose outer peripheral surface is slidable along an inner peripheral surface of the spring chamber 55 and whose inner peripheral side is engaged to a step portion 51a formed on an outer peripheral surface of the spool 51. The spring 52 is disposed in a compressed state between the stopper member 56 and the spring receiving member 57.

In the pilot chamber 50, a housing portion 50a capable of housing an end portion side of the spool 51, a small diameter portion 50b having a diameter smaller than that of the housing portion 50a, and a large diameter portion 50c communicating with the pilot pressure control valve 12 and having a diameter larger than that of the small diameter portion 50b, are formed communicating in series.

When no pilot pressure is guided to the pilot chamber 50, the spool 51 is biased by the biasing force of the spring 52, and one end plane 51b comes into contact with a bottom surface of the housing portion 50a within the pilot chamber 50, thereby regulating movement, and is held in the neutral position A (state shown in Figs. 1 and 3).

On the other hand, when the pilot pressure is guided to the pilot chamber 50, the spool 51 compresses the spring 52 and moves, and the other end plane 51c comes into contact with an end plane of the stopper member 56 within the spring chamber 55, thereby regulating movement, and is switched to the switched position B (state shown in Figs. 2 and 4).

Inside the valve housing 54 are formed: a first supplying and discharging passage 61 communicating with the rod side chamber 4 of the quick hitch cylinder 1; a second supplying and discharging passage 62 communicating with the anti-rod side chamber 5 of the quick hitch cylinder 1; a pilot passage 63 communicating with the pilot pump 11; and a tank passage 64 communicating with the tank 7.

The first supplying and discharging passage 61 opens to an external plane of the valve housing 54 via a first cylinder port 71, and opens to the spool hole 53 via a first supplying and discharging port 84. The second supplying and discharging passage 62 opens to an external plane of the valve housing 54 via a second cylinder port 72, and opens to the spool hole 53 via a second supplying and discharging port 87. The pilot passage 63 opens to an external plane of the valve housing 54 via a pilot port 73 as a sub-pump port, and opens to the spool hole 53 via an extension port 88. The tank passage 64 opens to the spool hole 53 via a first discharging port 85 and a second discharging port 86.

The spool hole 53 is further formed having opened a tank port 81 communicating with the tank 7 and main pump ports 82 formed on either side of the tank port 81 and communicating with the main pump 10.

The first cylinder port 71 is connected to the rod side chamber 4 via a pipe 17, and the second cylinder port 72 is connected to the anti-rod side chamber 5 via a pipe 18. Moreover, the pilot port 73 is connected to the pilot pump 11 via a pipe 19, and the working oil discharged from the pilot pump 11 is guided to the pilot port 73.

Inside the valve housing 54, a bridge passage 65 is formed, which bridge passage communicates with the main pump port 82 via a passage not illustrated. The bridge passage 65 opens to the spool hole 53 via a contraction port 83. The bridge passage 65 is provided with a check valve 66 that allows just a flow of the working oil from the main pump port 82 to the contraction port 83.

The spool hole 53 has, from the tank port 81 serving as a center thereof, the main pump port 82, the contraction port 83, the first supplying and discharging port 84, and the first discharging port 85 towards the pilot chamber 50, and the main pump port 82, the second discharging port 86, the second supplying and discharging port 87, and the extension port 88 towards the spring chamber 55.

The spool 51 has a first land portion 91 corresponding to the tank port 81, and has, from the first land portion 91 serving as a center thereof, a second land portion 92 and a third land portion 93 towards the pilot chamber 50, and a fourth land portion 94, a fifth land portion 95, and a sixth land portion 96 towards the spring chamber 55.

The second and fourth land portions 92 and 94 switch the communication and disconnection between the tank port 81 and the main pump port 82. Moreover, the second land portion 92 switches the communication and disconnection between the contraction port 83 and the first supplying and discharging port 84. The third land portion 93 switches the commnication and disconnection between the first supplying and discharging port 84 and the first discharging port 85. The fifth land portion 95 switches the communication and disconnection between the second supplying and discharging port 87 and the second discharging port 86, and switches the communication and disconnection between the extension port 88 and the second supplying and discharging port 87.

In the spool 51, a first annular groove 41 is formed between the first land portion 91 and the second and fourth land portions 92 and 94, a second annular groove 42 is formed between the second land portion 92 and the third land portion 93, a third annular groove 43 is formed between the fourth land portion 94 and the fifth land portion 95, and a fourth annular groove 44 is formed between the fifth land portion 95 and the sixth land portion 96.

Inside the spool 51, an in-spool passage 46 is formed, which in-spool passage opens to the end plane 51c and constantly communicates with the second discharging port 86. The in-spool passage 46 consists of an axial directional passage 46a that opens to the end plane 51c and extends in the axial direction of the spool 51, and a radial directional passage 46b that is formed in a radial direction of the spool and communicates the axial directional passage 46a with the third annular groove 43. The in-spool passage 46 constantly communicates the spring chamber 55 with the second discharging port 86 regardless of the axial directional position of the spool 51, and discharges oil within the spring chamber 55 to the tank passage 64 via the second discharging port 86. As such, the in-spool passage 46 functions as a passage for releasing pressure.

Next, operations of the control valve 100 will be described.

When no pilot pressure is guided to the pilot chamber 50, the spool 51 is biased by biasing force of the spring 52, the end plane 51b thereof comes into contact with the bottom surface of the housing portion 50a within the pilot chamber 50 thereby regulating movement, and is kept in the neutral position A, as shown in Fig. 3.

In this state, the main pump port 82 communicates with the tank port 81 via the first annular groove 41, and the communication of the contraction port 83 with the first supplying and discharging port 84 is disconnected by the second land portion 92. This causes the working oil discharged from the main pump 10 to be discharged to the tank 7. Moreover, the extension port 88 communicates with the second supplying and discharging port 87 via the fourth annular groove 44, and the communication of the second supplying and discharging port 87 with the second discharging port 86 is disconnected by the fifth land portion 95. This causes the pilot port 73 to communicate with the second cylinder port 72 via the pilot passage 63 and the second supplying and discharging passage 62, and the working oil discharged from the pilot pump 11 is supplied to the anti-rod side chamber 5. Furthermore, the first supplying and discharging port 84 communicates with the first discharging port 85 via the second annular groove 42. This causes the first cylinder port 71 to communicate with the tank passage 64 via the first supplying and discharging passage 61, and the working oil of the rod side chamber 4 is discharged to the tank 7.

As described above, in a state in which the spool 51 is kept in the neutral position A, the working oil discharged from the main pump 10 is discharged to the tank 7, while the working oil discharged from the pilot pump 11 is supplied to the anti-rod side chamber 5 and the working oil of the rod side chamber 4 is discharged to the tank 7. This causes the quick hitch cylinder 1 to be kept in the extended state due to the discharging pressure of the pilot pump 11.

When the pilot pressure is guided to the pilot chamber 50, the spool 51 moves against the biasing force of the spring 52 until the end plane 51c comes into contact with an end plane of the stopper member 56 by the pilot pressure working on the end plane 51b, thereby being switched to the switched position B, as shown in Fig. 4.

In this state, the communication of the extension port 88 with the second supplying and discharging port 87 is disconnected by the fifth land portion 95, and the second supplying and discharging port 87 communicates with the second discharging port 86 via the third annular groove 43. This causes the second cylinder port 72 to communicate with the tank passage 64 via the second supplying and discharging passage 62, and the working oil of the anti-rod side chamber 5 is discharged to the tank 7. Moreover, the communication of the main pump port 82 with the tank port 81 is disconnected by the first land portion 91 and the second land portion 92, and the communication of the first supplying and discharging port 84 with the first discharging port 85 is disconnected by the third land portion 93, while the contraction port 83 communicates with the first supplying and discharging port 84 via the second annular groove 42. This causes the main pump port 82 to communicate with the first cylinder port 71 via the bridge passage 65 and the first supplying and discharging passage 61, and the working oil discharged from the main pump 10 is supplied to the rod side chamber 4.

As described above, when the spool 51 switches to the switched position B, the supply of the working oil from the pilot pump 11 to the anti-rod side chamber 5 is disconnected and the working oil of the anti-rod side chamber 5 is discharged to the tank 7, while the working oil discharged from the main pump 10 is supplied to the rod side chamber 4. This causes the quick hitch cylinder 1 to contract due to the discharging pressure of the main pump 10.

Next, a formed position of the pilot port 73 will be described with reference to mainly Figs. 3 to 5.

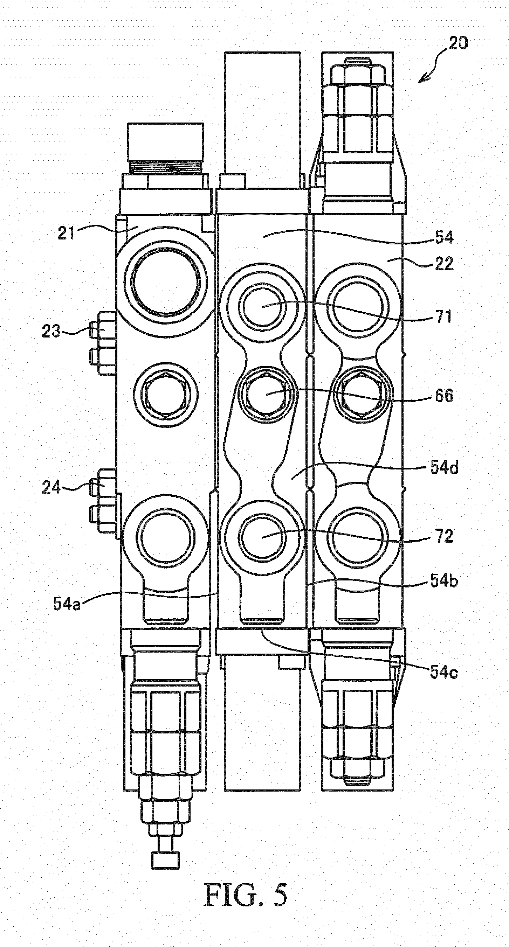

As shown in Fig. 5, the valve housing 54 of the control valve 10 that controls actuation of the quick hitch cylinder 1, and valve housings 21 and 22 of a control valve that controls actuation of actuators other than the quick hitch cylinder 1, are stacked to configure the valve block 20. Fig. 5 shows a case in which the valve housing 54 of the control valve 100 is disposed between the valve housing 21 and the valve housing 22, and the valve housings 21, 54, and 22 are tightened together as one with bolts 23 and 24.

The pilot port 73 guiding working oil that makes the quick hitch cylinder 1 extend is formed to open on a plane other than stacked planes 54a and 54b on which adjacent valve housings 21 and 22 are stacked, among outer planes of the valve housing 54.

More specifically, the pilot port 73 is formed, as shown in Figs. 3 and 4, on a plane 54c on which an opening 53a of the spool hole 53 communicating with the spring chamber 55 is formed, among the outer planes of the valve housing 54 having a substantially rectangular parallelepiped shape. The pilot port 73 is formed to open in a direction parallel to the spool 51, on the plane 54c of the valve housing 54. The pilot passage 63 consists of a first passage 63a formed parallel to the spool 51 and opening to the plane 54c of the valve housing 54 via the pilot port 73, and a second passage 63b formed substantially perpendicular to the first passage 63a and opening to the spool hole 53 via the extension port 88.

Here, in a case in which the pilot port 73 is formed to open on the stacked planes 54a and 54b on which the adjacent valve housings 21 and 22 are stacked among the outer planes of the valve housing 54, the working oil discharged from the pilot pump 11 will be guided to the valve housing 54 via a valve housing stacked adjacent to the valve housing 54 and be supplied to the anti-rod side chamber 5 of the quick hitch cylinder 1. That is to say, there is a need to stack a dedicated valve housing on the valve housing 54. The dedicated valve is for guiding the working oil to extend the quick hitch cylinder 1 to the valve housing 54. In this way, in the case in which the pilot port 73 is formed to open on the stacked planes 54a and 54b on which the adjacent valve housingss 21 and 22 are stacked among the outer planes of the valve housing 54, the dedicated valve housing for guiding the working oil to extend the quick hitch cylinder 1 to the valve housing 54 will be required other than the valve housing 54 of the control valve 100 for the quick hitch cylinder 1, thereby increasing the size of the valve block.

In contrast, in the present embodiment, since the pilot port 73 is formed to open on the plane 54c other than the stacked planes 54a and 54b on which the adjacent valve housings 21 and 22 are stacked among the outer planes of the valve housing 54, it is possible to supply the working oil discharged from the pilot pump 11 to the anti-rod side chamber 5 of the quick hitch cylinder 1 just via the valve housing 54 of the control valve 100 for the quick hitch cylinder 1. That is to say, just by connecting the pilot pump 11 to the pilot port 73 via the pipe 19, the working oil discharged from the pilot pump 11 can be supplied to the anti-rod side chamber 5 of the quick hitch cylinder 1. Therefore, the valve block 20 can be configured in a compact manner, and the space required for the valve block 20 can be reduced. Moreover, the pilot port 73 is formed on the plane 54c on which the opening 53a of the spool hole 53 communicating with the spring chamber 55 is formed, among the outer planes of the valve housing 54, and is formed to open in a direction parallel to the spool 51. This allows for disposing the pipe 19 that connects the pilot pump 11 to the pilot port 73 along the spring chamber 55. Therefore, a unit including the pipe 19 and the valve block 20 can be configured in a compact manner.

The following states the reason why the pilot port 73 can be formed to open on the plane 54c other than the stacked planes 54a and 54b on which the adjacent valve housings 21 and 22 are stacked among the outer planes of the valve housing 54.

The working oil for keeping the quick hitch cylinder 1 in the extended state is guided from the pilot pump 11, and not the main pump 10. That is to say, when the quick hitch cylinder 1 is kept in the extended state, the working oil discharged from the main pump 10 is not used. Therefore, in the present embodiment, just the bridge passage 65 for connecting the main pump port 82 with the first supplying and discharging port 84 is formed, and no bridge passage for connecting the main pump port 82 with the second supplying and discharging port 87 is formed. Accordingly, the first discharging port 85 that communicates with the first supplying and discharging port 84 when the spool 51 is in the neutral position A is formed on an end portion side of the valve housing 54, whereas the second discharging port 86 that communicates with the second supplying and discharging port 87 when the spool 51 is in the switched position B is formed not on the end portion side of the valve housing 54 but on a position symmetrical to the contraction port 83 formed on an end portion of the bridge passage 65, about the tank port 81 serving as the center. That is to say, in the present embodiment, no bridge passage for connecting the main pump port 82 with the second supplying and discharging port 87 exists; it is thus possible to form the second discharging port 86 between the main pump port 82 and the second supplying and discharging port 87. As a result of this, a dead space exists on an end portion of the spring chamber 55 side inside the valve housing 54, and the pilot passage 63 is formed in this dead space.

Thus, by forming the pilot passage 63 by using the dead space inside the valve housing 54, the pilot port 73 can be formed to open on the plane 54c other than the stacked planes 54a and 54b on which the adjacent valve housings 21 and 22 are stacked, among the outer planes of the valve housing 54.

According to the above embodiment, the following effects are achieved.

The pilot port 73 guiding the working oil that makes the quick hitch cylinder 1 extend is formed to open on the plane 54c other than a stacked plane on which adjacent valve housings 21 and 22 are stacked among the outer planes of the valve housing 54; thus, there is no need to use the dedicated valve housing for guiding the working oil to extend the quick hitch cylinder 1. That is say, in the present embodiment, the supply of the working oil discharged from the pilot pump 11 to the quick hitch cylinder 1 can be carried out just by one valve housing 54, and there is no need to use two valve housings. Therefore, the valve block 20 can be configured in a compact manner, and the space required for the valve block 20 can be reduced. Moreover, the number of components decreases, thereby allowing for production cost reduction.

Moreover, when the quick hitch cylinder 1 is extended, the pilot port 73 communicates with the second cylinder port 72 via the fourth annular groove 44 formed on an outer peripheral surface of the spool 51. In this way, the working oil that makes the quick hitch cylinder 1 extend is guided through the fourth annular groove 44 formed on the outer peripheral surface of the spool 51; thus, the working oil guided to the pilot port 73 can be supplied to the quick hitch cylinder 1 with a simple configuration.

Furthermore, the second discharging port 86 is formed between the main pump port 82 and the second supplying and discharging port 87. This causes a dead space to exist on the end portion on the spring chamber 55 side inside the valve housing 54, and the pilot passage 63 is formed in this dead space. Thus, the pilot port 73 can be formed to open on the plane 54c other than the stacked planes 54a and 54b on which the adjacent valve housings 21 and 22 are stacked, among the outer planes of the valve housing 54.

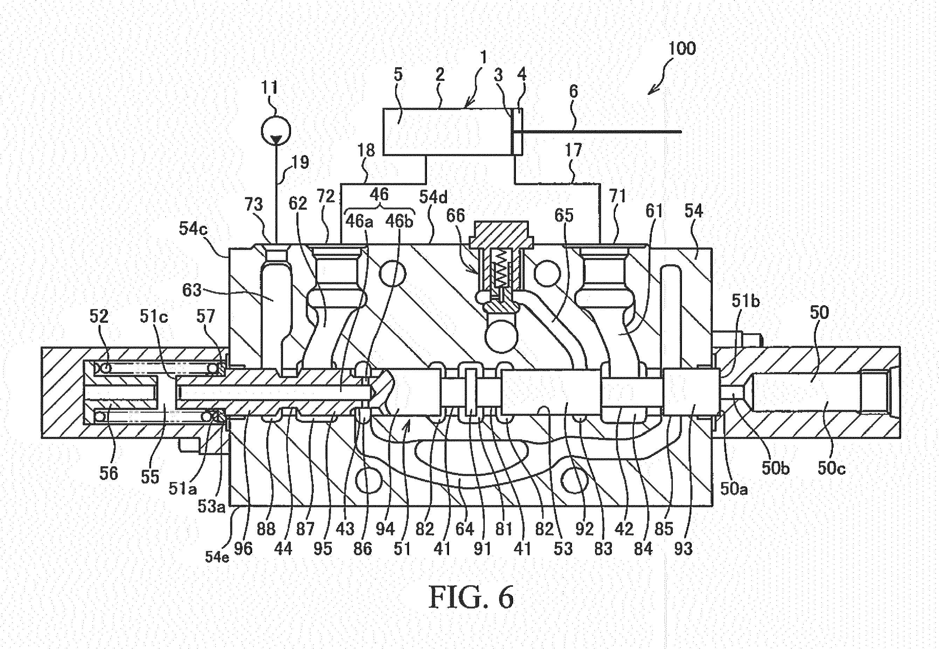

Next, a modification of the present embodiment will be described with reference to Fig. 6.

In the above embodiment, explanations of the pilot port 73 is made for a case of being formed on the plane 54c on which the opening 53a of the spool hole 53 communicating with the spring chamber 55 is formed, among the outer planes of the valve housing 54. However, as shown in Fig. 6, the pilot port 73 may be formed on a plane 54d on which the first cylinder port 71 and the second cylinder port 72 are formed, among the outer planes of the valve housing 54. In the modification shown in Fig. 6, the pilot port 73 is formed to open in a direction perpendicular to the spool 51, on the plane 54d of the valve housing 54. The pilot passage 63 opens to the plane 54d of the valve housing 54 via the pilot port 73, and is formed linearly to open to the spool hole 53 via the extension port 88. As such, the pilot passage 63 is configured in a simple manner, thereby facilitating production of the valve housing 54.

The pilot port 73 may be formed on a plane 54e that faces the plane 54d on which the first cylinder port 71 and the second cylinder port 72 are formed, among the outer planes of the valve housing 54.

The plane 54d and the plane 54e are, similarly to the plane 54c, planes other than the stacked planes 54a and 54b on which the adjacent valve housings 21 and 22 are stacked among the outer planes of the valve housing 54, and thus achieves the same effects as the above embodiment.

## Claims

1. A fluid pressure control device (200) comprising:
a main pump (10) configured to discharge working fluid;
a pilot pump (11) configured to discharge working fluid having a lower pressure than that of the main pump (10); and
a control valve (100) configured to control extending and contracting of a quick hitch cylinder (1) for actuating a quick hitch mechanism,
the control valve (100) including:
a spool (51) configured to switch supplying and discharging of a working fluid to the quick hitch cylinder (1) according to a movement thereof in an axial direction;
a valve housing (54) having a spool hole (53) in which the spool (51) is inserted slidably in the axial direction;
a spring chamber (55) provided to face one axial end of the spool (51), a biasing member (52) that biases the spool (51) is housed in the spring chamber (55);
a pilot chamber (50) provided to face the other axial end of the spool (51), wherein a pilot pressure from the pilot pump (11) can be guided to the pilot chamber (50) to make the spool (51) to move against a biasing force of the biasing member (52);
a first cylinder port (71) configured to communicate with a rod side chamber (4) of the quick hitch cylinder (1);
a second cylinder port (72) configured to communicate with an anti-rod side chamber (5) of the quick hitch cylinder (1); and
a main pump port (82) communicating with the main pump (10) and configured to communicate with the first cylinder port (71) when pilot pressure from the pilot pump (11) is guided to the pilot chamber (50) and the spool (51) moves in the axial direction against the biasing force of the biasing member (52);
a pilot port (73) communicating with the pilot pump (11) and configured to communicate with the second cylinder port (72) when no pilot pressure is guided to the pilot chamber (55),
wherein the pilot port (73) is formed to open on a plane (54c, 54d, 54e) of the valve housing (54) other than a stacked plane (54a, 54b) on which an adjacent valve housing (21, 22) of an adjacent control valve can be stacked, among outer planes of the valve housing (54).

2. The fluid pressure control device (200) according to claim 1, wherein
the pilot port (73) is formed on a plane (54c) on which an opening (53a) of the spool hole (53) communicating with the spring chamber (55) is formed, among outer planes of the valve housing (54).

3. The fluid pressure control device (200) according to claim 1, wherein the pilot port (73) is formed on a plane (54d) on which the first cylinder port (71) and the second cylinder port (72) are formed or on a plane (54e) facing such plane (54d), among outer planes of the valve housing (54).

4. The fluid pressure control device (200) according to any one of claims 1 to 3, wherein
the pilot port (73) communicates with the second cylinder port (72) via an annular groove (44) formed on an outer peripheral surface of the spool (51).

5. The fluid pressure control device (200) according to any one of claims 1 to 4, the control valve (100) further includes:
a tank passage (64) configured to communicate with a tank (7);
a discharging port (86) formed on one end of the tank passage (64), the discharging port (86) opening to the spool hole (53); and
a supply and discharging passage (62) having the second cylinder port (72) formed on one end thereof, a supplying and discharging port (87) opened on the spool hole (53) being formed on the other end thereof, wherein
the first cylinder port (71) communicates with the main pump port (82) and the supplying and discharging port (87) communicates with the discharging port (86), when pilot pressure acts on the pilot chamber (50) and the spool (51) moves, and
the discharging port (86) is formed between the main pump port (82) and the supplying and discharging port (87).

6. A fluid pressure control device (200) according to any one of claims 1 to 5, further comprising
a pilot pressure control valve (12) configured to control pilot pressure guided to the pilot chamber (50) of the control valve (100) from the pilot pump (11),
wherein
the pilot pressure control valve (12) has a normal position (C) that blocks a communication of the pilot pump (11) and the pilot chamber (50), and a communicating position (D) that guides pilot pressure from the pilot pump (11) to the pilot chamber (50).

## Patentansprüche

1. Flüssigkeitsdruckregelungsvorrichtung (200) aufweisend:
eine Hauptpumpe (10), die konfiguriert ist Arbeitsflüssigkeit auszugeben;
eine Pilotpumpe (11), die konfiguriert ist Arbeitsflüssigkeit auszugeben welche einen geringeren Druck hat als die der Hauptpumpe (10); und
ein Steuerventil (100), das konfiguriert ist zum Steuern des Ausfahrens und Zusammenziehens eines Schnellwechslerzylinders (1) zum Betätigen eines Schnellkupplungsmechanismus, wobei das Steuerventil (100) umfasst:
eine Spule (51), die konfiguriert ist, dass sie die Zufuhr und Abfuhr von einer Arbeitsflüssigkeit zum Schnellwechslerzylinder (1) entsprechend seiner Bewegung in einer axialen Richtung umschaltet;
ein Ventilgehäuse (54) mit einem Spulenloch (53), in das die Spule (51) verschiebbar in der Axialrichtung eingesetzt ist;
eine Federkammer (55), die so vorgesehen ist, dass sie einem axialen Ende der Spule (51) zugewandt ist; ein Vorspannelement (52), das die Spule (51) vorspannt, ist in der Federkammer (55) untergebracht;
eine Vorsteuerkammer (50), die so vorgesehen ist, dass sie dem anderen axialen Ende der Spule (51) zugewandt ist, wobei ein Vorsteuerdruck von der Pilotpumpe (11) zur Vorsteuerkammer (50) geleitet werden kann so dass sich die Spule (51) gegen eine Spannkraft des Vorspannelements (52) bewegt;
einen ersten Zylinderanschluss (71), der konfiguriert ist mit einer stangenseitigen Kammer (4) des Schnellwechslerzylinders (1) zu kommunizieren;
einen zweiten Zylinderanschluss (72), der konfiguriert ist mit einer Antistangen-Seitenkammer (5) des Schnellwechslerzylinders (1) zu kommunizieren; und
einen Hauptpumpenanschluss (82), der zur Kommunikation mit der Hauptpumpe (10) vorgesehen und konfiguriert ist, dass er mit dem ersten Zylinderanschluss (71) kommuniziert, wenn Steuerdruck von der Pilotpumpe (11) zur Vorsteuerkammer (50) geleitet wird und sich die Spule (51) in der Axialrichtung gegen die Spannkraft des Vorspannelements (52) bewegt;
einen Pilotanschluss (73), der mit der Pilotpumpe (11) kommuniziert und so konfiguriert ist, dass er mit dem zweiten Zylinderanschluss (72) kommuniziert, wenn kein Steuerdruck zur Vorsteuerkammer (55) geleitet wird,
wobei der Pilotanschluss (73) so ausgebildet ist, dass er sich auf einer Ebene (54c, 54d, 54e) des Ventilgehäuses (54) öffnet, das anders als einer Stapelebene (54a, 54b) ist, auf der ein benachbartes Ventilgehäuse (21, 22) eines angrenzenden Steuerventils gestapelt werden kann, unter Außenebenen des Ventilgehäuses (54).

2. Die Flüssigkeitsdruckregelungsvorrichtung (200) nach Anspruch 1, wobei der Pilotanschluss (73) auf einer Ebene (54c) geformt ist an der eine Öffnung (53c) des Spulenlochs (53) geformt ist, dass mit der Federkammer (55) kommuniziert, entlang Außenebenen des Ventilgehäuses (54).

3. Die Flüssigkeitsdruckregelungsvorrichtung (200) nach Anspruch 1, wobei der Pilotanschluss (73) auf einer Ebene (54d), auf der der erste Zylinderanschluss (71) und der zweite Zylinderanschluss (72) ausgebildet sind, oder auf einer dieser Ebene (54d) zugewandten Ebene (54e) unter den Außenebenen des Ventilgehäuses (54) ausgebildet ist.

4. Die Flüssigkeitsdruckregelungsvorrichtung (200) nach einem der Ansprüche 1 bis 3, wobei der Pilotanschluss (73) mit dem zweiten Zylinderanschluss (72) über eine Ringnut (44) kommuniziert, die an einer Außenumfangsfläche der Spule (51) ausgebildet ist.

5. Die Flüssigkeitsdruckregelungsvorrichtung (200) nach einem der Ansprüche 1 bis 4, wobei das Steuerventil (100) weiterhin aufweist:
einen Tankdurchgang (64), der konfiguriert ist mit einem Tank (7) zu kommunizieren;
eine Auslassöffnung (86), die an einem Ende des Tankdurchgangs (64) ausgebildet ist, wobei die Auslassöffnung (86) zum Spulenloch (53) hin offen ist; und
einen Zufuhr- und Ablassdurchgang (62), an dessen einem Ende der zweite Zylinderanschluss (72) ausgebildet ist, und an dessen anderem Ende eine Zufuhr- und Ablassöffnung (87), die zum Spulenloch (53) hin offen ist, ausgebildet ist, wobei
der erste Zylinderanschluss (71) mit dem Hauptpumpenanschluss (82) kommuniziert und die Zufuhr- und Ablassöffnung (87) mit der Auslassöffnung (86) kommuniziert, wenn der Steuerdruck auf die Vorsteuerkammer (50) wirkt und sich die Spule (51) bewegt, und die Auslassöffnung (86) zwischen dem Hauptpumpenanschluss (82) und dem Zufuhr- und Ablassöffnung (87) gebildet ist.

6. Flüssigkeitsdruckregelungsvorrichtung (200) nach einem der Ansprüche 1 bis 5, weiter aufweisend:
ein Hauptdrucksteuerventil (12), das konfiguriert ist Steuerungsdruck zu steuern der zu der Vorsteuerkammer (50) des Steuerventils (100) von der Pilotpumpe (11) geführt wird, wobei das Hauptdrucksteuerventil (12) eine Normalstellung (C) hat, die eine Verbindung der Pilotpumpe (11) und der Vorsteuerkammer (50) blockiert, und eine Verbindungsstellung (D), die Vorsteuerdruck von der Pilotpumpe (11) zur Vorsteuerkammer (50) leitet.

## Revendications

1. Dispositif de régulation de pression de fluide (200) comprenant :
une pompe principale (10) configurée pour refouler un fluide de travail ;
une pompe pilote (11) configurée pour refouler un fluide de travail ayant une pression inférieure à celle de la pompe principale (10) ; et
une vanne de régulation (100) configurée pour réguler l'extension et la contraction d'un cylindre d'attache rapide (1) pour actionner un mécanisme d'attache rapide,
la vanne de régulation (100) comprenant :
une bobine (51) configurée pour commuter l'alimentation et le refoulement d'un fluide de travail vers le cylindre d'attache rapide (1) en fonction d'un mouvement de celui-ci dans une direction axiale ;
un boîtier de vanne (54) comportant un trou de bobine (53) dans lequel la bobine (51) est insérée de manière coulissante dans la direction axiale ;
une chambre à ressort (55) prévue pour faire face à une extrémité axiale de la bobine (51), un élément de sollicitation (52) qui sollicite la bobine (51) est logé dans la chambre à ressort (55) ;
une chambre pilote (50) prévue pour faire face à l'autre extrémité axiale de la bobine (51), dans lequel une pression pilote provenant de la pompe pilote (11) peut être guidée vers la chambre pilote (50) pour amener la bobine (51) à se déplacer à l'encontre d'une force de sollicitation de l'élément de sollicitation (52) ;
un premier orifice de cylindre (71) configuré pour communiquer avec une chambre côté tige (4) du cylindre d'attache rapide (1) ;
un second orifice de cylindre (72) configuré pour communiquer avec une chambre anti-côté tige (5) du cylindre d'attache rapide (1) ; et
un orifice de pompe principale (82) communiquant avec la pompe principale (10) et configuré pour communiquer avec le premier orifice de cylindre (71) lorsque la pression pilote provenant de la pompe pilote (11) est guidée vers la chambre pilote (50) et la bobine (51) se déplace dans la direction axiale à l'encontre de la force de sollicitation de l'élément de sollicitation (52) ;
un orifice pilote (73) communiquant avec la pompe pilote (11) et configuré pour communiquer avec le second orifice de cylindre (72) lorsqu'aucune pression pilote n'est guidée vers la chambre pilote (55),
dans lequel l'orifice pilote (73) est formé pour s'ouvrir sur un plan (54c, 54d, 54e) du boîtier de vanne (54) autre qu'un plan empilé (54a, 54b) sur lequel un boîtier de vanne adjacent (21, 22) d'une vanne de régulation adjacente peut être empilé, parmi des plans extérieurs du boîtier de vanne (54).

2. Dispositif de régulation de pression de fluide (200) selon la revendication 1, dans lequel
l'orifice pilote (73) est formé sur un plan (54c) sur lequel une ouverture (53a) du trou de bobine (53) communiquant avec la chambre à ressort (55) est formée, parmi des plans extérieurs du boîtier de vanne (54).

3. Dispositif de régulation de pression de fluide (200) selon la revendication 1, dans lequel
l'orifice pilote (73) est formé sur un plan (54d) sur lequel le premier orifice de cylindre (71) et le second orifice de cylindre (72) sont formés ou sur un plan (54e) faisant face à un tel plan (54d), parmi des plans extérieurs du boîtier de vanne (54).

4. Dispositif de régulation de pression de fluide (200) selon l'une quelconque des revendications 1 à 3, dans lequel
l'orifice pilote (73) communique avec le second orifice de cylindre (72) via une rainure annulaire (44) formée sur une surface périphérique extérieure de la bobine (51).

5. Dispositif de régulation de pression de fluide (200) selon l'une quelconque des revendications 1 à 4, la vanne de régulation (100) comprenant en outre :
un passage de réservoir (64) configuré pour communiquer avec un réservoir (7) ;
un orifice de refoulement (86) formé sur une extrémité du passage de réservoir (64), l'orifice de refoulement (86) s'ouvrant dans le trou de bobine (53) ; et
un passage d'alimentation et de refoulement (62) ayant le second orifice de cylindre (72) formé sur une extrémité de celui-ci, un orifice d'alimentation et de refoulement (87) ouvert sur le trou de bobine (53) étant formé sur l'autre extrémité de celui-ci, dans lequel
le premier orifice de cylindre (71) communique avec l'orifice de pompe principale (82) et l'orifice d'alimentation et de refoulement (87) communique avec l'orifice de refoulement (86), lorsque la pression pilote agit sur la chambre pilote (50) et la bobine (51) se déplace, et
l'orifice de refoulement (86) est formé entre l'orifice de pompe principale (82) et l'orifice d'alimentation et de refoulement (87).

6. Dispositif de régulation de pression de fluide (200) selon l'une quelconque des revendications 1 à 5, comprenant en outre
une vanne de régulation de pression pilote (12) configurée pour réguler la pression pilote guidée vers la chambre pilote (50) de la vanne de régulation (100) à partir de la pompe pilote (11), dans lequel
la vanne de régulation de pression pilote (12) a une position normale (C) qui bloque une communication entre la pompe pilote (11) et la chambre pilote (50), et une position de communication (D) qui guide la pression pilote provenant de la pompe pilote (11) à la chambre pilote (50).
